# NEW EUROPEAN PATENT SPECIFICATION

(11) **EP 2 280 885 B2**
(45) Date of publication and mention of the opposition decision: **30.08.2017**
(45) Mention of the grant of the patent: 29.01.2014
(21) Application number: 09738178.4
(22) Date of filing: 29.04.2009
(51) Int. Cl.: B65D 85/804, A47J 31/00, A47J 31/36

(54) **SEALED CAPSULE FOR CONTAINING BEVERAGE INGREDIENTS AND HAVING AN INLET-SIDE MEMBRANE**
VERSCHLOSSENE KAPSEL FÜR GETRÄNKEBESTANDTEILE MIT EINLASSSEITIGER MEMBRAN
CAPSULE SCELLEE DESTINEE A CONTENIR DES INGREDIENTS DE BOISSON ET COMPRENANT UNE MEMBRANE DU COTE D'ENTREE

(30) Priority: 30.04.2008 EP 08155427
(43) Date of publication of application: 09.02.2011
(60) Divisional application: 11185821.3
(73) Proprietor: Nestec S.A., 1800 Vevey (CH)
(72) Inventor: BOUSSEMART, Christophe, S., 74500 Lugrin (FR); YOAKIM, Alfred, 1806 Saint-Légier-La Chiésaz (CH)
(74) Representative: Rupp, Christian
(86) International application number: PCT/EP2009/055184
(87) International publication number: WO 2009/133134

(56) References cited:
- EP-A- 1 767 467
- EP-A- 1 772 081
- EP-A- 1 775 234
- EP-A1- 1 555 219
- EP-B1- 0 507 905
- WO-A-2006/137737
- WO-A-2007/039032
- WO-A1-2004/087529
- WO-A1-2006/030461
- DE-A1- 2 255 552
- FR-A- 2 617 389
- US-A- 4 577 080
- US-A1- 2003 005 826
- US-A1- 2003 172 813

## Description

The present invention generally relates to the field of production of beverages or other liquid comestibles on the basis of ingredients contained in a capsule.

Such capsules are known for being inserted in matching beverage production machines (e.g. coffee machines). After being placed in an extraction chamber of the beverage production machine, water is injected into the capsule. The water will interact with the ingredients contained in the capsule. As a result of the interaction, a beverage or other comestible will be produced which can then be obtained from the capsule.

The invention preferably uses capsules which are hermetically sealed at a production site and which are inserted into the extraction chamber of the beverage production machine while still being in the sealed state. The capsule is opened both at the water inlet face for injection water under pressure in the capsule as well as at the beverage outlet face for delivering the beverage. Opening on both sides may be produced by dedicated members of the machine. Note that these members can be driven manually, e.g. via a lever mechanism, or automatically by motor or by effect of the deformation under the internal pressure building in the capsule.

For user's convenient, no manual opening of the sealed capsule is necessary.

EP 0512468 relates to a gastight capsule with a truncated body and a tear membrane which is torn against a puncturing holder of the machine under the effect of the inside pressure built in the capsule when a liquid is injected through the inlet face of the capsule.

EP 870 457 A1 and WO 94/02059 disclose a similar extraction methods and extraction machines for essentially symmetrical capsules.

WO 94/01344 also describes a symmetrical capsule.

EP-A-1772081 relates to a device for preparing an infused liquid using a cartridge comprising a bottom forming both the inlet for the liquid and the outlet for the beverage. The bottom is further recessed and comprises openings for inlet of the liquid in the cartridge. The flow of liquid in the cartridge is not optimized because the same side of the capsule is used to form both the liquid inlet and beverage outlet. If the cartridge is placed under pressure of liquid, liquid will tend to bypass in the compartment by taking the shorter path. Typically, such cartridge is used at low pressure and liquid is just passed through the ingredients as in a fluid bed. This capsule is not adapted for providing a beverage under a high pressure of liquid.

DE2255552 relates to a beverage capsule with flow distributor in recess and slots provided in the sidewall of the body of the capsule. Again, the flow of liquid through the ingredients is not optimal and liquid can bypass the ingredients in its way to the slots.

EP 1344722 and EP 1552219A1 relate to a cartridge comprising a flow distributor and a flow collector forming inserts with embossings and channels and which are placed between the substance and the upper membrane or the bottom wall of the cartridges respectively.
WO 2006/030461 A1 relates to a capsule comprising an upper wall with perforation means underlying a sealing film, wherein the sealing film is perforated at the time of the use when pressurized water is supplied to the capsule and wherein the upper wall comprises openings directed towards a beverage ingredient compartment of the capsule.
EP 0 507 905 B1 relates to a capsule comprising a capsule body and a manually removable closing membrane, wherein an upper membrane comprising apertures is provided below the removable closing membrane.

When water: is infected into the interior of the capsule, especially when using ground coffee powder as an ingredient, it has to be assured that the water will be homogenously distributed all over the ingredients. An heterogeneous flow distribution of the water through the ingredients will lead to a poor quality or an unreliable quality of the produced beverage. In particular, the liquid tends to create privileged flowpaths through the bed of substance while leaving areas of the bed of substance insufficiently wetted.

One know solution consists in piercing a plurality of opening through the capsule and having the water enter the interior of the capsule at the openings such that water distributed evenly across the whole transversal section of the capsule. However, this leads to a rather complex machine which has to be provided with a plurality of perforation/water injection members to this regard. Furthermore, the production of a plurality of openings requires a relative high closure: force to be able to correctly pierce through the capsule for the injection of water.

Furthermore, for capsule formed of semi-rigid or rigid plastic, correct and repeated piercings can become difficult because the plastic tends to deform under the pressure of the piercing elements, e.g., blades, and the piercing elements tend to become blunt capsules after capsules.

Another issue, especially when extracting coffee from ground coffee powder containing capsule, is to control the flow rate of the usually pressurized hot water through the interior of the capsule. Depending on the kind of coffee to be produced, different flow rates and pressures inside the capsule have to be guaranteed. Flow rate may depend on the coffee average particle size and the compaction of the coffee in the capsule. For example, the flow rate through a coffee capsule to deliver a long coffee ("lungo") should be higher than the flow rate for delivering a short coffee ("espresso").

It exists cartridges comprising discrete inserts placed inside the ingredient chamber, e.g., cartridges as described in EP 1344722. Inserts provide several disadvantages. In particular, it renders the manufacturing and logistic more complex. This requires the handling, the placing and the fixing the inserts in the cartridge. Most of the time, the inserts are not totally fixed in the capsule and this may lead to variable thicknesses of the bed of substance and high variation of flow rates.

Another issue is that when a "long" beverage (e.g., 110 mL or more) is desired, the solution usually consists in passing a higher amount of water through the ingredients. However, this may result in over-extracting the ingredients and to bitterness issues of the final drink.

The present invention therefore has the object to provide a an improved water flow distribution technology for producing a beverage from a sealed and ingredient containing capsule with a reliable quality.

An object is to provide a capsule which is easier to manufacture and requires less discrete elements to handle and assemble when producing the capsule.

Another object is to facilitate and make reliable openings through the inlet face of the capsule, in particular, even when the capsule comprises form-stable part(s) made of material such as semi-rigid or rigid plastics. Therefore, it offers more freedom in the choice of materials for building the essential parts of the capsule. It also offers alternative solutions for opening the inlet face of the capsule.

The present invention seeks to address the above described problems. The invention also aims at other objects and particularly the solution of other problems as will appear in the rest of the present description.

### Object and summary of the invention

In a first aspect, the present invention proposes a sealed beverage capsule according to claim 1.

According to the invention, reliable control of the flow rate and the pleasure conditions inside the capsule can be achieved due to the perforated recessed section at the inlet face of the body of the capsule. Moreover, the liquid distribution at the inlet face of the capsule can be adjusted.

The recessed section of the capsule is a rigid tube-like member comprising an annular wall and a transversal bottom face. The bottom face thus is arranged transversally to the liquid flow path when liquid is passed through the capsule from the inlet face to the outlet face thereof.

Both the annular wall and the bottom face of the recessed section comprise water injection openings. Therefore, the flow of water entering the capsule can be distributed both in a substantially axial direction and in a substantially radial direction in the at least one chamber containing the ingredient. The combination of axial and radial flowpaths at the flow distribution site ensures that all part of the substance is properly wetted, in particular, at the entry side. The flow pattern and rate through the substance of the liquid can also be controlled in a more flexible manner depending on the location (radial/axial), number and cross-section of the injection openings in the recessed section.

Therefore, the injection openings of the recessed section are different for the bottom face and the annular wall. The difference may, for instance, be a difference in the cross section of the openings and/or density of the openings (i.e., number of injection openings by square centimetre).

Outside the recessed portion, the body of the capsule is devoided from any perforation that would constitute liquid inlets or beverage outlets. It is indeed important that the liquid flowpath is passed through the ingredients in its way to the outlet face, as aforementioned; without taking shortcuts through ingredients.

The body of the capsule is made of form-stable plastic or metal, e.g. aluminium in order to provide a stable casing of the capsule. As the recessed section is an integral part of the body of the capsule, both, the recessed section and the body are preferably manufactured in one single step. The recessed section hence is preferably of the same material as the body of the capsule. However, it may as well be possible that the recessed section is made of a different material. Accordingly, said recessed section and the body of the capsule are joined in an additional manufacturing step. For example, the recessed section may be made of metal such as aluminium which is then coated by an injection moulding process to form the capsule body.

It should be understood that the water injection openings of the flat bottom face of the tube-like member face the centre of the compartment for the ingredients. Thus, liquid which is passed through these openings is directed towards the centre of the capsule. Accordingly, liquid which is passed through the plurality of openings provided within the annular wall of the tube-like member is directed towards the side surfaces of the capsule. Hence, liquid passed through the perforated recessed section can be evenly distributed within the ingredient compartment of the capsule, since the openings face both, the centre of the compartment as well as the boundary portion of the compartment. Thus, a homogenous distribution of liquid within the capsule is achieved.

Thereby, the water injection openings of the recessed section may differ for the annular wall and the transversal bottom face thereof. The injection openings may differ in shape and their size. Moreover, the density of injection openings (i.e., number of injection openings in a nominal surface area) formed at the annular wall may differ from the density formed within the bottom surface. It is thus possible to use injection openings of different shape, size and density in order to adapt the flow rate through the injection openings. Accordingly, a different flow rate through the bottom surface and the annular wall can be obtained. It is thus possible to control the amount of liquid supplied to centre and the side of the ingredient compartment inside the capsule body.

The injection openings of the recessed section may as well be designed such that the flow resistance provided through the bottom surface is smaller at its periphery than at the centre area thereof. For example, the number of injection openings and/or their cross sections may be larger at the annular section of the recessed section than at its bottom surface. This configuration enables to distribute liquid, injected from the centre, more evenly through the whole cross section of the ingredients compartment of the capsule.

The injection openings of the recessed section may be manufactured using injection moulding process or common stamping techniques.

The additional cover member for sealing the recessed section at the inlet face of the capsule from the exterior thereof is a thin membrane suitable for being connected in an air-tight manner to the body of the capsule. Such a connection may for example be established using soldering or adhesive techniques. Preferably, the cover member is a thin metal membrane suitable for being pierced by dedicated opening means provided by a device the capsule is intended to be connected to in order to inject liquid into the capsule. In another preferred embodiment, the cover member is a thin plastic membrane suitable for being melted or dissolved by heating means in order to be able to inject a liquid into the capsule.

In another preferred embodiment, the capsule may comprise a bypass channel extending from the inlet face to the outlet face of the capsule body. Thereby, the bypass channel is preferably a tube-like member being disposed within the centre of the ingredients compartment. Preferably, the bypass channel is connected at least to the bottom of the recessed section. Thereby, an aperture is preferably formed at the bottom surface in order to establish a fluid connection between the recessed section and the bypass channel in case liquid is passed through the capsule.

The bypass channel may be integrally formed with the recessed section or connected by means of soldering or adhesive.

Accordingly, liquid which is injected into the inlet side of the capsule may enter the ingredient compartment of the capsule through the perforations provided at the annular sides of the recessed portion. However, as the bypass channel is connected to at least one aperture or perforation formed within the bottom surface of the recessed portion, liquid may bypass the ingredient compartment without interacting with the enclosed ingredients. This embodiment is particularly advantageous when "long beverages" are desired. Accordingly, an over-extracting of the ingredients and the resulting bitterness issues of the final drink can be effectively prevented since part of the dispensed liquid is not interacting with the ingredients within the capsule. Thereby, the amount of liquid passed through the bypass channel may be adjusted by means of the perforations or openings connected to the bypass channel at the bottom surface of the recessed section. Accordingly, the flow rate within the bypass channel can effectively be modified and the amount of liquid to bypass the ingredients can be adjusted.

In order to further adjust the flow rate through the bypass channel, the channel may as well comprise flow regulating means such as a duct, a valve or the like. Moreover, in another preferred embodiment, the bypass channel may as well comprise perforations at the circumferential surface of the channel in order to directly distribute liquid from the channel into the centre part of the ingredients compartment.

The bypass channel preferably has a constant diameter of several millimetres. It may as well be possible to have a varying diameter of the bypass channel. For example, the bypass channel may be of a greater diameter and hence forming an additional compartment for ingredients. Accordingly, the same or different ingredients may be enclosed within a first ingredient compartment of the capsule and within a second ingredient compartment which is formed by the bypass channel.

Hence, due to the different injection openings within the recessed section according to the invention, the distribution of liquid to the first and the second ingredient compartment can be regulated effectively.

Disclosed herein is also a system for preparing a beverage from a food substance contained in a capsule by injection of a liquid into the capsule, wherein said system comprises a device having at least one enclosing member connected to a closing mechanism for selectively enclosing said capsule in a receiving chamber of the device, said device further comprising a pump for supplying liquid to the capsule, opening means for opening a first inlet face and a second outlet face of the capsule, and a control unit for controlling at least the pump of the device, wherein the opening means are arranged to supply a liquid received from the pump to the inside of the capsule, wherein the capsule further comprises a closed rigid body and a recessed section formed as an integral part of the body, and wherein said recessed section is formed at the inlet face of the capsule and comprises a plurality of perforations. The inlet face has no perforations outside the recessed section that would provide outlets for the beverage. The outlets for the beverage are exclusively provided at the outlet face of the capsule which is separated by the compartment containing the ingredients. The outlet face is so positioned at the opposite from the inlet face in relation to the compartment. As a result, the flow path of the liquid through the capsule is properly controlled to ensure an homogeneous wetting of the ingredients in the compartment.

"Recessed section" is to be understood as a section which is recessed vis-à-vis the contours of the body of the capsule when seen in a side view.

With such a device, it is possible to enable an interaction between liquid supplied by the device, more particularly by the pump of the device, and ingredients contained in a capsule provided to the device. The internal pressure within the sealed capsule which is built up due to a liquid supply to the capsule causes a lower face of the capsule to open which enables the output of the beverage to be prepared. Thereby, the injection of the liquid provided by the device takes place at an upper face of the capsule which is opened by the opening means of the device. As already described, the output of the beverage to be prepared takes place at the lower face of the capsule thus, enabling a direct flow of the liquid. Accordingly, a receptacle such as a cup can be placed beneath the capsule in order to receive the beverage to be prepared.

The closing mechanism of the device has an open and a closed state. The capsule can only be inserted to or withdrawn from the device when the closing mechanism is in an open state. As the closing mechanism is connected to opening means for opening the capsule, it causes a relative movement of the said opening means and the capsule. Accordingly, by usage of the closing mechanism, the capsule provided to a receiving chamber of the device can effectively be opened and thus connected to the liquid supply of the capsule.

In a preferred embodiment, the capsule suitable for being enclosed by at least said one enclosing member of the device is of conical shape and has a rigid body. Said capsule further comprises a first inlet face and a second outlet face, wherein liquid may be injected into the capsule through said inlet face. The capsule contains one or more ingredients. After the injection of liquid into the capsule, the pouring from the capsule may be delayed in order to provide sufficient time for the interaction of the liquid and the ingredients contained within the capsule. For the pouring of the beverage to be prepared from the capsule, opening means such as reliefs against an outlet membrane which open an outlet face of the capsule may be provided. These opening means interact with the pressure rise within the capsule when the liquid is injected. The capsule has amongst others the advantage that beverages can be prepared without "cross-contamination" i.e. that a first beverage to be prepared does not transmit one or more undesired characteristics such as taste, colour and/or odour to a second beverage distributed after the first. The present invention may as well apply to any other food or beverage cartridge, pod or sachet containing ingredient(s) brewed, dissolved or diluted in a beverage device.

In a preferred embodiment, the capsule comprises an aperture at the inlet face of the capsule which is covered by a cover member such as a thin membrane or the like, suitable for sealing the capsule in an air-tight manner. In addition, a recessed section may be formed below the cover member. Said recessed section is preferably integrally formed with the body of the capsule. Moreover, said recessed section is suitable for receiving opening means of the device, the capsule is intended to be connected to. Therefore, the recessed section may have a tube-like or conical form. Preferably, the recessed section comprises a plurality of perforations in order to adjust the flow rate of liquid through the capsule.

The outlet face is preferably a closed tearable membrane. The outlet face of the capsule is preferably a thin aluminium membrane. The membrane is preferably suitable for being opened by opening means provided at the device. Such opening means may be for example protruding ridges or the like which are preferably provided at a lower enclosing member of the device which the capsule is intended to be connected to. When pressure is exerted to the interior of the capsule due to injection of liquid, the outlet face of the capsule interacts with said opening means and is thus ruptured. Accordingly, the liquid comestible can be poured from the capsule. The outlet membrane is preferably of a thickness between 20 and 100 microns.

The body of the capsule and the recessed section are preferably made of aluminium or plastic.

The cover member which covers the aperture at the inlet face of the capsule is preferably a thin aluminium membrane. However, the cover member may as well be of plastic material.

The opening means provided at the device in order to enable the opening of the capsule may be any means suitable for disintegrate the cover member. The opening means may for example be a needle element suitable for puncturing the cover member. In another preferred embodiment, the opening means may comprise heating means for melting, burning the cover or, alternatively, for softening the cover while piercing it. Hence, the cover can be opened in a more reliable way. This is particularly advantageous if the cover member of the capsule is made of plastic material.

Furthermore, the capsule preferably comprises sealing means for sealing at least one face of the capsule when being connected to the dedicated device. Hence, when the capsule is enclosed by the closing mechanism, the capsule can effectively be sealed. Thus, liquid injected into the capsule can be prevented from leaving the capsule.

Disclosed herein is also a beverage preparation device having at least one enclosing member connected to a closing mechanism for selectively enclosing said capsule in a receiving chamber of the device, said device further comprising
a pump for supplying liquid to the capsule,
opening means for opening an inlet face and an outlet face of the capsule,
a control unit for controlling at least the pump of the device,
wherein the opening means comprises heating elements for creating at least one opening by softening or melting at least one portion of the inlet face of the capsule.

Disclosed is also a beverage preparation system comprising a device as aforementioned and a single-use capsule adapted to be inserted in the device and comprising an inlet face formed of a softenable or meltable portion at its inlet face.

In a second aspect, the invention proposes a method for providing a liquid to a single-use capsule according to claim 10.

Disclosed is also a method for providing a liquid to a single-use beverage capsule having a body comprising the steps of opening an inlet face of the capsule and passing the liquid through at least one compartment containing the beverage ingredients wherein opening of the capsule for passing liquid through the inlet face is carried out by softening or melting at least one portion of the inlet face of the capsule.

In a third aspect, the invention proposes the use of a sealed capsule as defined by claim 11.

### Brief description of the drawings

Further features, advantages and objects of the present invention will become apparent for the skilled person when reading the following detailed description of embodiments of the present invention, when taking in conjunction with the figures of the enclosed drawings.
- Fig. 1: shows a device for beverage preparation in side view.
- Fig. 2: shows the receiving chamber for the capsule in sectional side view.
- Fig. 3: shows a preferred embodiment of a capsule according to the present invention in sectional side view.
- Fig. 4: shows another preferred embodiment of a capsule according to the present invention in sectional side view, wherein a bypass channel is provided within the capsule.
- Fig. 5: shows another preferred embodiment of a capsule according to the present invention in sectional side view, wherein the capsule comprises two compartments for ingredients.
- Fig. 6: shows another preferred embodiment of a capsule according to the present invention in sectional side view, wherein a bypass channel of the capsule forms a separate compartment for ingredients.

### Detailed description of embodiments

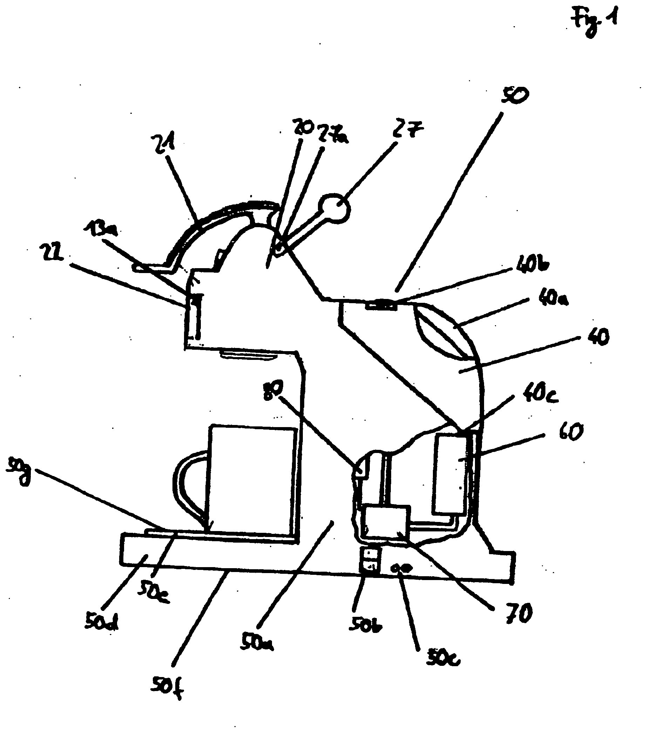

Figure 1 shows a beverage preparation device 50 in side view. The device 50 comprises a housing 50a containing at least a heater 60, a pump 70 and control means 80. Further the device comprises a liquid reservoir 40 connected to the device (which optionally can be replaced by an external liquid supply), an extraction head 20 and a base 50f. The device further comprises a stand 50d for a receptacle such as a cup having an upper surface 50e provided with a grid 50g on which the receptacle is positioned.

The reservoir 40 is provided in order to supply liquid such as water to the heater 60 and the pump 70, and hence to the extraction head 20 of the device 50. Preferably, the reservoir 40 is connected to the device in a detachable manner and has an inlet 40b in order to insert liquid. An outlet 40c which is preferably situated at the bottom of the reservoir 40 enables a connection between the reservoir 40 and the device 50.

The extraction head 20 of the device comprises a closing mechanism 21 for selectively enclosing a capsule 1 provided to the device 50 and an optional control mechanism (lever, switch, etc.) 27 for selectively supplying water to the extraction head 20 and hence to the capsule 1. Thereby, the control lever 27 is connected at least to the control means 80 of the device 50.

The device further comprises a main switch 50b and a plurality of control indicators 50c which may inform the user about the operating status of the device 50. The control means 80 are at least connected to the pump 70 of the device in order to control the liquid supply.

As can be seen in figure 1, an aperture 22 is provided at the extraction head 20 of the device 50 in order to access a receiving chamber 16 of the extraction head. The aperture 22 can be selectively opened and closed by the closing mechanism 21 of the device 50. Therefore, the closing mechanism 21 is connected to at least one enclosing member 13a which may be moved in response to an operation of the closing mechanism 21, thus opening or closing the aperture 22. Accordingly, it is possible to provide a capsule 1 to said receiving chamber 16 if the closing mechanism 21 is in an open state. The capsule may be provided to the receiving chamber 16 by hand or by means of a capsule-holder which may be connected to the device. Preferably, such a capsule-holder fits into the aperture 22 provided at the extraction head.

The device further comprises a main switch 50b and a plurality of control indicators 50c which may inform the user about the operating status of the device 50.

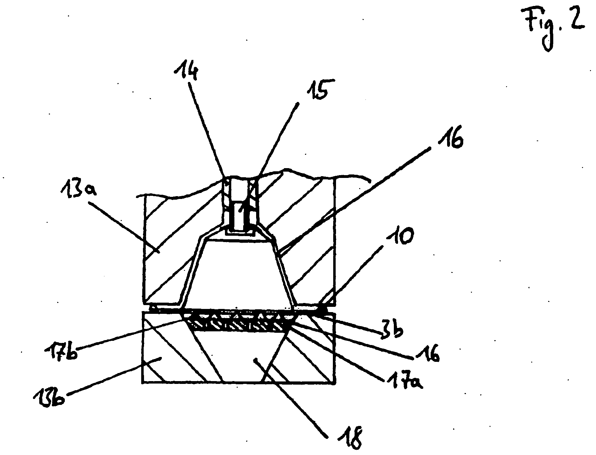

Figure 2 shows a sectional side view of the extraction head 20 of the device 50. The receiving chamber 16 is enclosed by preferably a first and second enclosing member 13a, 13b. At least one of said enclosing members is connected to the closing mechanism 21 in order to enable a relative movement of the enclosing members 13a, 13b. Hence, after the capsule 1 is inserted into the receiving chamber 16 when the closing mechanism 21 is in an open state, the closing mechanism 21 may be brought into a closed state such that the enclosing members 13a, 13b are approached relatively towards each other. Thus, a capsule 1 situated within the receiving chamber 16 may effectively be enclosed by the enclosing members 13a, 13b as shown in figure 2.

Injection means 14 are provided at the first enclosing member 13a in order to provide liquid to the sealed capsule 1 within the receiving chamber 16. Said injection means 14 are connected to the pump 70 of the device 50. Thus liquid can effectively be provided from the reservoir 40 to the receiving chamber 16. The injection means 14 comprise opening means 15 which are protruding into the receiving chamber 16 of the device 50 when the closing mechanism 21 is brought into a closed state. Accordingly, a capsule 1 enclosed within the receiving chamber 16 can effectively be opened by said opening means 15. Accordingly, the capsule 1 can effectively be connected to the injection means 14 and liquid provided by the pump 70 to the injection means 14 can thus be injected into the capsule 1.

The opening means may be any means suitable for providing at least one opening in a cover member 5 of the capsule, as will be explained later on.

In a preferred embodiment, said cover member 5 is a thin membrane preferably made of metal such as e.g. aluminium and/or of polymer. Preferably, the cover member 5 is made of a material which has a lower perforation resistance than the material of the body. Accordingly, the opening means 15 may be a sharp protruding needle element suitable for puncturing the cover member 5. The term "needle" encompasses piercing means such as blades or spikes of various shapes.

In another preferred embodiment, said cover member 5 of the capsule is made of a meltable or heat softenable material such as thermoplastics such as polyethylene, polyamide or polypropylene. Therefore, the opening means 15 can be a heating element suitable for melting or burning the cover member 5 in order to open the capsule 1 and inject liquid therein. Of course, the opening means 15 can be both piercing and heat softening elements. For instance, the opening means 15 can be one or more needles which are heated to a temperature reaching the softening or melting point of the cover. Thus, certain plastics can be used which are not easily pierced by non-heated needles but can open easily by heated needles since the piercing resistance is reduced under the heat conditions of the needle. For instance, the needles can be heated by heat transfer using electrical wires embedded in the injection head. Opening means may also be contact less heat radiant means such as lamps or heating wires.

At the lower enclosing member 13b, opening means 16 are provided for interacting with the outlet face 3b of the capsule 1. Said opening means 16 is preferably a plate which comprises protruding elements 17b such as small pyramids or needles suitable for puncturing the outlet face 3b of the capsule 1. Hence, liquid injected into the capsule 1 can be released by said outlet face 3b. Moreover, the opening means 16 preferably comprise liquid channels 17a which connect an upper surface of the opening member 16 to its lower surface. Accordingly, liquid poured from the capsule 1 can effectively be guided from the upper surface of the opening means 16 to an outlet 18 which is connected to the liquid channels 17a.

Furthermore, the capsule 1 preferably comprises sealing means 10 which are suitable for sealing the receiving chamber 16 during the injection of liquid into the capsule 1. The sealing means are preferably arranged circumferentially at the outlet face 3b of the capsule 1. More preferably, the sealing means are arranged circumferentially at a flange 2a of the body 2 of the capsule1. Thus, when the closing mechanism 21 is brought into a closed state, thereby approaching the enclosing members 13a, 13b, the sealing means 10 are compressed between the enclosing members 13a, 13b as shown in figure 2. Thus, effective sealing of the receiving chamber 16 is obtained.

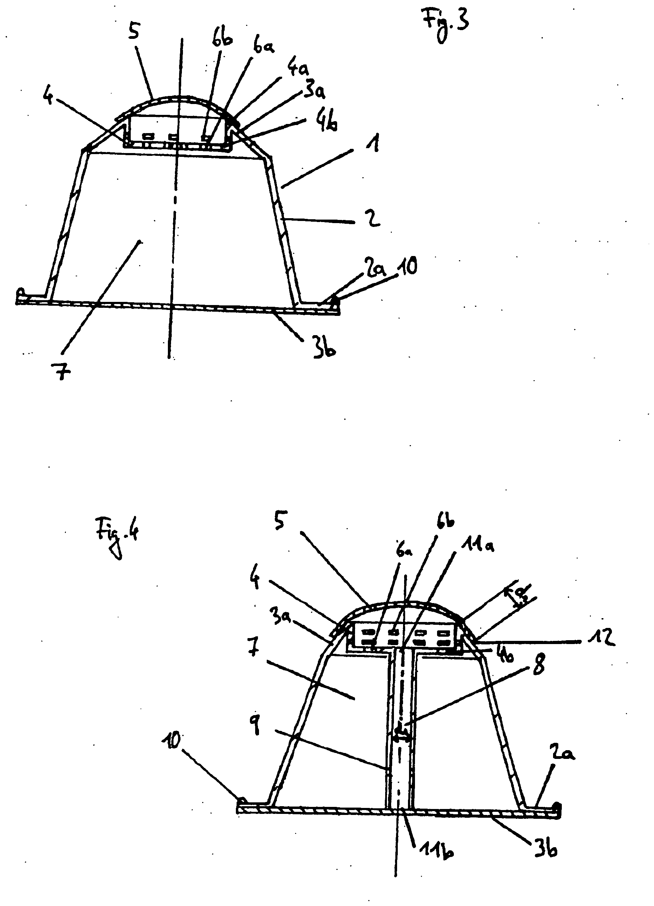

Figure 3 shows a preferred embodiment of the capsule 1 according to the invention in sectional side view. As can be seen from this figure, the capsule 1 is of conical shape and comprises a body having an inlet face 3a and membrane defining the outlet face 3b. The body 2 of the capsule is preferably a rigid or at least a form stable body made from plastics or metal, e.g. aluminium.

The outlet face 3b is preferably a thin membrane such as e.g. an aluminium membrane which is connected to a flange 2a of the rigid body 2. The outlet face 3b is preferably sealed by welding and/or crimping to said flange 2a.

The capsule 1 comprises at least one compartment for ingredients 7 which is enclosed by the rigid body 2 and the outlet face 3b of the capsule 1.

At the inlet face 3a of the capsule 1, a recessed section 4 is formed as an integral part of the body 2. "Recessed" is to be understood as being recessed vis-a-vis the outer surface of the otherwise substantially convex body.

When manufacturing the body, the recessed section 4 can be produced by deforming the sheet used for the body. As - see details later on - the recessed section 4 can act as a water distributor, a water distributor can be achieved integrally with the body walls and thus without asking for the provision of a separate piece.

As shown in the figure, said recessed section 4 preferably comprises an annular cylindrical wall 4a and a transversal bottom face 4b. The annular wall 4a comprises a plurality of perforations 6b which are preferably arranged homogenously over the surface of the wall 4a. However, it may be of particular interest to provide the perforations 6b in an non-homogeneous way over the surface of the wall 4a. Moreover, the size, the shape and the amount of the perforations may be altered for different sections of the annular wall 4a in order to adjust the flow rate of the liquid passed through said perforations. Therefore, the perforations may be of any geometrical shape such as circular or squared.

Apart from the recessed section 4 the body 2 is not provided with openings.

The bottom face 4b of the recessed section 4 preferably comprises perforations 6a which preferably differ from the perforations 6b provided at the annular wall 4a. The perforations may differ in their size, their shape and in the provided number of perforations 6b at the bottom face 4b. Accordingly, a different flow rate of liquid passed through the perforations 6a of the annular wall 4a and the perforations 6b of the bottom face 4b may be achieved.

As can be seen from the figures, the bottom face 4b of the recessed section faces the centre portion of the compartment for receiving the ingredients 7. The annular wall 4a by contrast faces the side walls of the body 2 of the capsule 1. Accordingly, the flow rates through the perforations at the annular wall 4a and the bottom face 4b can be adjusted in order to obtain a preferred distribution of liquid within the compartment for ingredients 7 in the capsule 1.

Of course, the recessed section 4 may be recessed even further towards the centre of the compartment for ingredients 7 compared to the shown embodiment in figure 3. Hence, even further adjustment of the liquid distribution within the capsule 1 can be achieved.

In order to cover the inlet face 3a of the capsule, a cover member 5 is provided which seals the inlet face 3a in an air-tight manner. The cover member 5 is preferably a thin membrane which is mounted to the body 2 as a separate piece e.g. by welding or adhesive techniques. The cover member 5 has a diameter larger than the recessed section 4 such that the cover member 5 overlaps with the closed wall of the body 2 surrounding the recessed section 4.

The cover member 5 being a piece separate from the body 2 and the recessed section 4, it can be made form a material different to the one used for the body 2. Thus e.g. the body can be made from plastics, which due to its elasticity is not easy to be opened mechanically, while the cover member 5 can be made from a metal membrane (e.g. aluminium) which is easier to be perforated.

On the other hand, if the body is made from a metal, the cover member can be made from plastics in order to allow for an opening via heat (melting).

The cover member 5 is preferably dome-shaped as shown in the figure. However, the cover member 5 may as well present a flat surface or a cup-shaped surface. Moreover, the cover member 5 is preferably made of metal such as aluminium. In another preferred embodiment, the cover member 5 is of plastic material. Thus, effective sealing of the capsule 1 can be achieved by the cover member 5.

In addition, the flange 2a of the capsule body 2 preferably comprises sealing means 10. Thus, when the capsule 1 is connected to a dedicated device, effective sealing can be achieved during operation of the device.

Figure 4 shows another preferred embodiment of the capsule 1 according to the present invention in sectional side view. In this embodiment, a bypass channel 8 is provided which comprises an inlet aperture 11a and an outlet aperture 11b. Preferably, the inlet aperture 11a is connected to the recessed section 4 of the capsule 1. The outlet aperture 11b is preferably situated in vicinity of the outlet face 3b of the capsule 1. The bypass channel is preferably of cylindrical shape and has a constant diameter d1. Preferably, the diameter d1 is between 0.5mm and 3mm. Accordingly, liquid injected to the capsule 1 can be guided through the perforations 6a, 6b and the inlet aperture 11a of the bypass channel in order to adjust the liquid distribution within the capsule 1.

In another preferred embodiment, the bypass channel may comprise additional means for controlling the flow rate within the channel such as a duct or a valve. Moreover, the bypass channel may optionally comprise perforations 9 at its circumferential surface in order to supply liquid provided to the channel 8 to the centre of the compartment of ingredients 7.

As indicated in figure 4, the cover member 5 is preferably connected to the inlet face 3a of the capsule 1 at a circumferential surface 12 of the inlet face 3a. The contours of the surface 12 and the cover member 5 preferably overlap at a circular section d2. Hence, effective sealing of the capsule 1 is obtained by the cover member 5.

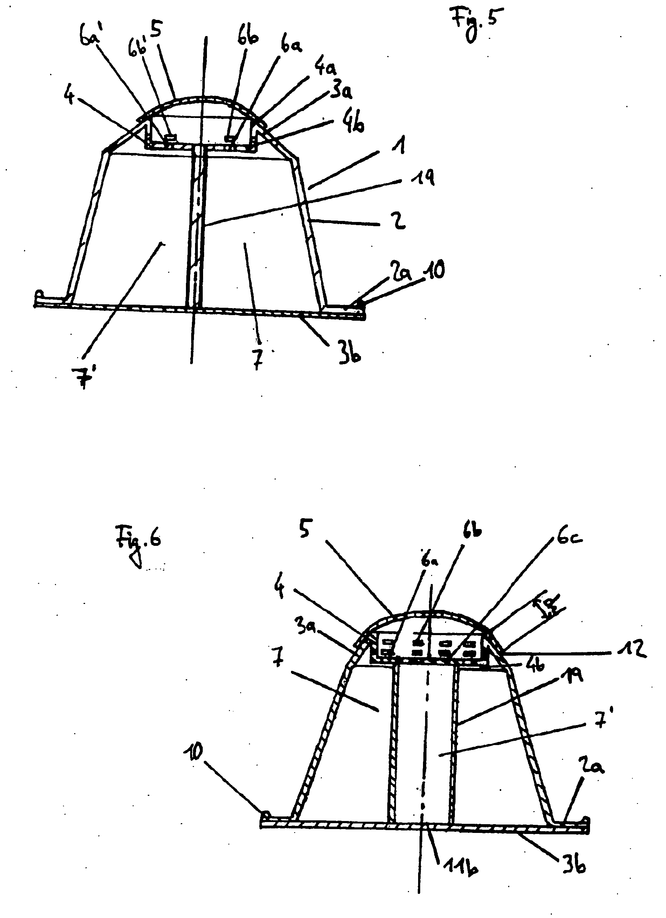

Figure 5 shows another preferred embodiment of a capsule according to the present invention. Therein, the capsule 1 comprises a separating member 19 which is preferably a thin wall or membrane and which divides the interior of the capsule 1 such that at least two compartments for ingredients 7, 7' are formed symmetrically or asymmetrically on the two sides of the separating member 19. Thereby, the separating member 19 may provide two equal compartments 7, 7'. However, it may as well be possible to provide two different compartments 7,7' with respect to their volume. Accordingly to this embodiment, two equal or different ingredients can be housed within these compartments.

The separating member 19 is preferably a thin wall made of metal or plastic material. The separating member 19 is connected to the recessed section 4 at its one side and to the outlet face 3b of the capsule 1 at its other side. Preferably, the separating member 19 is an integral part of the recessed element 4.

With respect to this embodiment, it should be understood that the recessed member 4 comprises different perforations for being in fluid connection with the first and the second compartment 7,7'. Hence, the perforations 6a and 6b formed at the annular wall 4a and at the bottom face 4b which are connecting the inlet side 3a of the capsule to the first ingredients compartment 7 are preferably different from the corresponding perforations 6a' and 6b' leading to the second ingredients compartment 7'. Hence, the flow rate through these perforations 6a, 6b, 6a', 6b' can effectively be adjusted for each of the provided ingredients compartments 7,7'.

Figure 6 shows another preferred embodiment of the present invention, wherein the separating member 19 is of circular shape and provides a tube-like member within the ingredients compartment 7. Accordingly, a second ingredient compartment 7' is formed by said tube-like member 19.

In this embodiment, the perforations 6a and 6b correspond to the perforations of the embodiment according to figure 3. However, the perforations 6c provided at the centre of the bottom face 4b of the recessed section 4 which are connecting the inlet side 3a of the capsule to the second ingredient compartment 7' preferably differ from the perforations 6a formed in the annular section of the bottom face 4b which are connecting the inlet side 3a and the first compartment 7. Hence, the flow rate and distribution of liquid injected into the capsule 1 can be effectively adjusted for the first and the second compartment 7,7'.

Although the present invention has been described with reference to preferred embodiments thereof, many modifications and alternations may be made by a person having ordinary skill in the art without departing from the scope of this invention which is defined by the appended claims.

## Claims

1. A sealed beverage capsule (1) for preparing a beverage from a beverage preparation device comprising:
- a form-stable body (2) having an inlet face (3a) for introducing a liquid into the capsule after being opened,
- an outlet face (3b) for delivering of the beverage from said capsule (1),
said capsule further comprising:
a recessed section (4) at the inlet face (3a) of the body (2) of the capsule (1),
at least one compartment for ingredients (7,7') located between the inlet face (3a) and the outlet face (3b) of the body (2) of the capsule (1),
wherein the recessed section (4) has a tube-like form arranged for receiving dedicated opening means of the beverage preparation device, wherein said recessed section (4) is sealed against the exterior of the capsule (1) in an air-tight manner by means of an additional cover member (5) connected to the body (2) of the capsule (1) as a separate piece, and the additional cover member (5) is a thin membrane, made of a material which has a lower perforation resistance than the material of the body
and whereby the thin membrane is sealed on the inlet face in an airtight manner,
wherein the recessed section (4) is an integral part of the body (2) and is provided with a plurality of injection openings, wherein outside the recessed section, the body (2) of the capsule is devoid from any perforation that would constitute liquid inlets or beverage outlets,
wherein the recessed section (4) of the capsule (1) is a form-stable tube-like member comprising an annular wall (4a) and a bottom face (4b) which is arranged transversally relative to the main flow path of the liquid through the capsule (1), and
wherein both the annular wall (4a) and the bottom face (4b) comprise injection openings.

2. The capsule according to claim 1,
wherein the injection openings (6a,6b) of the recessed section (4) is different for the bottom face (4b) and the annular wall (4a) thereof.

3. The capsule according to claim 2,
wherein the body (2) and recessed section (4) of the capsule is made integrally of form-stable plastics or aluminium optionally with plastic layer(s).

4. The capsule according to any of claims 1 to 3,
wherein the outlet face is a closed tearable membrane.

5. The capsule according to claim 4, wherein the outlet membrane is of thickness between 20 and 100 microns.

6. The capsule according to any of claims 3 or 4,
wherein the cover member (5) is a membrane made of plastics or metal such as aluminium
and thinner than the body (2).

7. The capsule according to any of claims 1 to 6,
wherein the capsule further comprises a bypass channel (8) extending from the inlet face (3a) to the outlet face (3b) of the body (2), wherein the bypass channel (8) is connected to the recessed section (4) at the inlet face (3a).

8. The capsule according to any of claims 1 to 6,
wherein the injection openings (6a,6b,11a) of the recessed section (4) differ with regard to their shape, their size, and/or their amount.

9. The capsule according to any of claims 1 to 8,
wherein the capsule (1) comprises a first and a second compartment for ingredients (7,7') and wherein the capsule (1) further comprises means (6a,6b,6c, 11) for regulating the distribution and/or the flow rate to the first and second compartments (7,7').

10. A method for providing a liquid to a single-use capsule (1) according to any one of claims 1 to 9, comprising the steps of
providing a capsule according to any of claims 1 to 9,
opening the cover member (5) which is sealing the inlet face (3a) of the capsule (1) in an air-tight manner; the recess receiving the dedicated opening means of the beverage preparation device and
passing the liquid through the recessed section (4) of the capsule (1), and having the liquid being distributed wherein the recessed section (4) is an integral part of the body (2) of the capsule (1) and wherein the recessed section (4) comprises a plurality of injection openings (6a,6b,6c,11) in the compartment.

11. Use of a sealed beverage capsule according to any of the preceding claims 1 to 9 for preparing a beverage from a beverage preparation device.

## Patentansprüche

1. Abgedichtete Getränkekapsel (1) zum Zubereiten eines Getränks aus einer Getränkezubereitungsvorrichtung, umfassend:
- einen formstabilen Körper (2) mit einer Einlassseite (3a) zum Einbringen einer Flüssigkeit in die Kapsel nach dem Öffnen,
- eine Auslassseite (3b) zum Ausgeben des Getränks aus der Kapsel (1), wobei die Kapsel ferner Folgendes umfasst:
einen vertieften Abschnitt (4) an der Einlassseite (3a) des Körpers (2) der Kapsel (1), mindestens ein Fach für Zutaten (7,7'), das zwischen der Einlassseite (3a) und der Auslassseite (3b) des Körpers (2) der Kapsel (1) angeordnet ist,
wobei der vertiefte Abschnitt (4) eine röhrenähnliche Form zum Aufnehmen spezieller Öffnungsmittel der Getränkezubereitungsvorrichtung aufweist, wobei der vertiefte Abschnitt (4) gegen das Äußere der Kapsel (1) mit einem zusätzlichen Abdeckelement (5), das mit dem Körper (2) der Kapsel (1) als separates Teil verbunden ist, luftdicht abgedichtet ist, und wobei das zusätzliche Abdeckelement (5) eine dünne Membran ist, die aus einem Material besteht, das eine geringere Perforationsbeständigkeit als das Material des Körpers aufweist,
und wobei die dünne Membran an der Einlassseite luftdicht abgedichtet ist, wobei der vertiefte Abschnitt (4) ein integraler Bestandteil des Körpers (2) ist und mit einer Vielzahl von Einspritzöffnungen bereitgestellt ist, wobei der Körper (2) der Kapsel außerhalb des vertieften Abschnitts keinerlei Perforationen aufweist, die Flüssigkeitseinlässe oder Getränkeauslässe darstellen würden,
wobei der vertiefte Abschnitt (4) der Kapsel (1) ein formstabiles, röhrenähnliches Element ist, das eine ringförmige Wand (4a) und eine Unterseite (4b) umfasst, die in Bezug auf den Hauptflussweg der Flüssigkeit durch die Kapsel (1) quer angeordnet ist, und wobei sowohl die ringförmige Wand (4a) als auch die Unterseite (4b) Einspritzöffnungen umfassen.

2. Kapsel nach Anspruch 1,
wobei die Einspritzöffnungen (6a, 6b) des vertieften Abschnitts (4) an der Unterseite (4b) sich von denen an der ringförmigen Wand (4a) des vertieften Abschnitts unterscheiden.

3. Kapsel nach Anspruch 2,
wobei der Körper (2) und der vertiefte Abschnitt (4) der Kapsel einstückig aus formstabilem Kunststoff oder Aluminium wahlweise mit einer oder mehreren Kunststoffschichten bestehen.

4. Kapsel nach einem der Ansprüche 1 bis 3,
wobei die Auslassseite eine geschlossene, zerreißbare Membran ist.

5. Kapsel nach Anspruch 4, wobei die Auslassmembran eine Dicke von zwischen 20 und 100 Mikrometern aufweist.

6. Kapsel nach einem der Ansprüche 3 oder 4,
wobei das Abdeckelement (5) eine Membran aus Kunststoff oder Metall, wie Aluminium, und dünner als der Körper (2) ist.

7. Kapsel nach einem der Ansprüche 1 bis 6,
wobei die Kapsel ferner einen Umgehungskanal (8) umfasst, der sich von der Einlassseite (3a) zu der Auslassseite (3b) des Körpers (2) erstreckt, wobei der Umgehungskanal (8) an der Einlassseite (3a) mit dem vertieften Abschnitt (4) verbunden ist.

8. Kapsel nach einem der Ansprüche 1 bis 6,
wobei die Einspritzöffnungen (6a, 6b, 11a) des vertieften Abschnitts (4) in Hinblick auf ihre Form, ihre Größe und/oder ihre Menge unterschiedlich sind.

9. Kapsel nach einem der Ansprüche 1 bis 8,
wobei die Kapsel (1) ein erstes und ein zweites Fach für Zutaten (7,7') umfasst, und wobei die Kapsel (1) ferner Mittel (6a, 6b, 6c, 11) zum Regulieren der Verteilung und/oder Steuern der Rate des Flusses zu dem ersten und dem zweiten Fach (7,7') umfasst.

10. Verfahren zum Bereitstellen einer Flüssigkeit an eine Einwegkapsel (1) nach einem der Ansprüche 1 bis 9, folgende Schritte umfassend
Bereitstellen einer Kapsel nach einem der Ansprüche 1 bis 9,
Öffnen des Abdeckelements (5), das die Einlassseite (3a) der Kapsel (1) luftdicht abdichtet; wobei der vertiefte Abschnitt die speziellen Öffnungsmittel der Getränkezubereitungsvorrichtung aufnimmt, und
Passieren der Flüssigkeit durch den vertieften Abschnitt (4) der Kapsel (1), und Verteilenlassen der Flüssigkeit, wobei der vertiefte Abschnitt (4) ein integraler Bestandteil des Körpers (2) der Kapsel (1) ist, und wobei der vertiefte Abschnitt (4) eine Vielzahl von Einspritzöffnungen (6a, 6b, 6c, 11) in dem Fach umfasst.

11. Verwendung einer abgedichteten Getränkekapsel nach einem der vorstehenden Ansprüche 1 bis 9 zum Zubereiten eines Getränks aus einer Getränkezubereitungsvorrichtung.

## Revendications

1. Capsule de boisson scellée (1) pour la préparation d'une boisson à partir d'un dispositif de préparation de boisson, comprenant :
- un corps de forme stable (2) ayant une face d'entrée (3a) pour l'introduction d'un liquide dans la capsule après avoir été ouverte,
- une face de sortie (3b) pour distribuer la boisson depuis ladite capsule (1), ladite capsule comprenant en outre :
une section évidée (4) au niveau de la face d'entrée (3a) du corps (2) de la capsule (1), au moins un compartiment pour ingrédients (7, 7') situé entre la face d'entrée (3a) et la face de sortie (3b) du corps (2) de la capsule (1),
dans laquelle la section évidée (4) présente une forme de type tube, disposée pour recevoir un moyen d'ouverture dédié du dispositif de préparation de boisson, dans laquelle ladite section évidée (4) est scellée contre l'extérieur de la capsule (1) de manière étanche à l'air au moyen d'un élément de couvercle supplémentaire (5) relié au corps (2) de la capsule (1) comme une pièce séparée et l'élément de couvercle supplémentaire (5) est une membrane fine, constituée d'un matériau qui présente une résistance à la perforation inférieure à celle du matériau du corps
et moyennant quoi la membrane fine est scellée sur la face d'entrée d'une manière étanche à l'air, dans laquelle la section évidée (4) est une partie intégrante du corps (2) et comprend une pluralité d'ouvertures d'injection, dans laquelle, à l'extérieur de la section évidée, le corps (2) de la capsule est dépourvu d'une quelconque perforation qui constituerait des entrées de liquide ou des sorties de boisson,
dans laquelle la section évidée (4) de la capsule (1) est un élément de type tube de forme stable comprenant une paroi annulaire (4a) et une face inférieure (4b) qui est disposée de façon transversale par rapport au trajet d'écoulement principal du liquide à travers la capsule (1) et dans laquelle la paroi annulaire (4a) et la face inférieure (4b) comprennent des ouvertures d'injection.

2. Capsule selon la revendication 1,
dans laquelle les ouvertures d'injection (6a, 6b) de la section évidée (4) sont différentes pour la face inférieure (4b) et la paroi annulaire (4a) de celle-ci.

3. Capsule selon la revendication 2,
dans laquelle le corps (2) et la section évidée (4) de la capsule sont formés d'un seul tenant à partir de matières plastiques ou d'aluminium de forme stable, facultativement avec une ou plusieurs couche(s) de matière plastique.

4. Capsule selon l'une quelconque des revendications 1 à 3,
dans laquelle la face de sortie est une membrane déchirable fermée.

5. Capsule selon la revendication 4, dans laquelle la membrane de sortie est d'une épaisseur entre 20 et 100 micromètres.

6. Capsule selon l'une quelconque des revendications 3 ou 4,
dans laquelle l'élément de couvercle (5) est une membrane constituée de matières plastiques ou de métal tel que l'aluminium et plus fine que le corps (2).

7. Capsule selon l'une quelconque des revendications 1 à 6,
où la capsule comprend en outre un canal de dérivation (8) s'étendant de la face d'entrée (3a) à la face de sortie (3b) du corps (2), dans laquelle le canal de dérivation (8) est relié à la section évidée (4) au niveau de la face d'entrée (3a).

8. Capsule selon l'une quelconque des revendications 1 à 6,
dans laquelle les ouvertures d'injection (6a, 6b, 11) de la section évidée (4) diffèrent en ce qui concerne leur forme, leur taille et/ou leur quantité.

9. Capsule selon l'une quelconque des revendications 1 à 8,
où la capsule (1) comprend un premier et un second compartiment pour ingrédients (7, 7') et où la capsule (1) comprend en outre un moyen (6a, 6b, 6c, 11) pour réguler la distribution et/ou le débit vers les premier et second compartiments (7, 7').

10. Procédé de fourniture d'un liquide à une capsule à usage unique (1) selon l'une quelconque des revendications 1 à 9, comprenant les étapes de :
fourniture d'une capsule selon l'une quelconque des revendications 1 à 9,
ouverture de l'élément de couvercle (5) qui scelle la face d'entrée (3a) de la capsule (1) d'une manière étanche à l'air ; réception par l'évidement du moyen d'ouverture dédié du dispositif de préparation de boisson et
passage du liquide à travers la section évidée (4) de la capsule (1) et amener le liquide à être distribué, dans lequel la section évidée (4) est une partie intégrante du corps (2) de la capsule (1) et dans lequel la section évidée (4) comprend une pluralité d'ouvertures d'injection (6a, 6b, 6c, 11) dans le compartiment.

11. Utilisation d'une capsule de boisson scellée selon l'une quelconque des revendications précédentes 1 à 9, pour la préparation d'une boisson à partir d'un dispositif de préparation de boissons.
